Europäisches Patentamt

(19) European Patent Office

Office européen des brevets

(11) Publication number: **0 003 082**
**B1**

(12) **EUROPEAN PATENT SPECIFICATION**

(45) Date of publication of patent specification: **15.12.82**

(21) Application number: **78300892.3**

(22) Date of filing: **22.12.78**

(51) Int. Cl.³: **B 29 C 5/04,** B 29 C 11/00,
B 29 C 1/00

(54) Method and apparatus for rotationally moulding a decorated article.

(30) Priority: **30.12.77 GB 5430377**

(43) Date of publication of application:
**25.07.79 Bulletin 79/15**

(45) Publication of the grant of the patent:
**15.12.82 Bulletin 82/50**

(84) Designated Contracting States:
**BE DE FR IT LU NL SE**

(56) References cited:
**AT - B - 215 145**
**DD - A - 39 213**
**DE - A - 1 729 305**
**DE - B - 2 059 628**
**DE - C - 1 152 812**
**GB - A - 1 058 586**
**US - A - 3 581 346**

(73) Proprietor: **THE METTOY COMPANY LIMITED**
**14 Harlestone Road**
**Northampton, NN5 7AF (GB)**

(72) Inventor: **Crane, John Charles**
**7 Walton Heath Way**
**Links View Northampton (GB)**

(74) Representative: **Wain, Christopher Paul et al,**
**A.A. THORNTON & CO. Northumberland House**
**303-306 High Holborn**
**London WC1V 7LE (GB)**

Courier Press, Leamington Spa, England.

# Method and apparatus for rotationally moulding a decorated article

This invention relates to rotationally decorated rotationally moulded articles and to a method and a mould for producing such articles.

Previously, decorated rotationally moulded articles have been produced by first rotationally moulding the article and printing the decoration thereon. This has proved expensive, particularly if multi-coloured printing is required.

In the case of rotationally moulded decorated playballs, it is known to insert in the bottom of the mould before moulding a decorated insert of a plastics material which has the desired printing thereon, the material of the insert being compatible with that of the playball. When moulded, the insert is embedded in and fused with the finished playball. However, it is particularly difficult to properly locate and retain the insert in position.

Arrangements are known in non-rotational moulding techniques for attempting to obtain a positive location of a decorated carrier, such as shown in German Specification No. 1729305. However such arrangements are not applicable to rotational moulding. Furthermore, attempts to fuse an ink-carrying carrier with a substrate have previously been made with the ink layer innermost. Such attempts have resulted in articles in which the carrier can be peeled from the substrate.

It is also known, from East German specification no. 39213, to produce decorated rotationally moulded articles by first lightly gelling a PVC paste film on a highly polished metal or glass surface, cutting from the film shaped portions and placing them in a mould to form the desired decorative pattern, filling the mould with a base PVC paste, and then completely gelling the lightly gelled portions and the base paste by rotational moulding to form the decorated hollow article. This procedure has the disadvantage of being complex involving a number of steps, which are time-consuming and labour-intensive, and which makes the final product expensive.

An object of the invention is to provide a method by which a decorated article having a high level of quality can be produced relatively inexpensively, with the decoration being difficult to remove from the article.

In accordance with one aspect of the invention there is provided a method of producing a decorated article using a mould comprising a base part with a mould cavity and a lid part co-operating with but being movable away from the base part, said method comprising the steps of locating in a predetermined position on the lid part a carrier having ink thereon, charging the mould cavity with plastics material, and rotationally moulding the article, characterised in that the carrier is arranged with the ink facing the inner surface of the lid part, and that the lid part is located in a predetermined position on the base part with the carrier extending beyond the wall of the base part that is directed towards the lid part.

In accordance with another aspect of the invention, there is provided a rotational mould having a base part with a mould cavity and a lid part co-operating with but being movable relative to the base part, means for locating an ink-carrying carrier in a predetermined position relative to the lid part, characterised in that there are provided means for locating the lid part in a predetermined position relative to the base part, the lid part and the carrier having co-operating locating means that ensure that the carrier can only be positioned on the lid part such that the ink of the carrier faces the inner surface of the lid part and such that the carrier extends beyond the wall of the base part that is directed towards the lid part.

Preferably, the co-operating walls of the base mould part present a knife edge which is engageable with the lid part, the knife edge scoring or cutting through the carrier during moulding to avoid the necessity of pre-cutting the carrier to the shape of the base part of the mould.

The knife edge preferably has a thickness less than 1/32 inches (0.794 mm).

The carrier can be of any simple shape, for example rectangular, and may be located relative to the lid part by suitable locating means, for example projections on the lid part which co-operate with holes in the carrier.

The carrier is preferably plastics material which is during the moulding operation fused with the plastics material of the article. The carrier plastics material is below the ink layer in the finished article and serves to bond the ink layer to the substrate of the article and it may be opaque.

At least part of the inner surface of the lid part is preferably polished to enable the carrier to be attached thereto by suction. The polished surface provides a gloss finish on the corresponding surface of the article. The surface may be formed on a removable support plate which supports the carrier facing the base part.

The said surface may be etched or engraved to provide a relieved pattern on the corresponding surface of the article. The surface may additionally or alternatively have recesses which will be filled during moulding by the plastics material in the mould and which provide protuberances on the surface of the article for a further decorative effect.

An embodiment of the invention will now be described, by way of example, with reference to the accompanying drawings, in which:—

Figure 1 is a side elevation of a moulding apparatus having a plurality of moulds,

Figure 2 is a diagrammatic cross-sectional view of a mould of Figure 1,

Figure 3 is a plan view illustrating a printed carrier sheet for use with the moulds,

Figure 4 is a cross-sectional view of an article formed using the mould of Figure 2,

Figure 5 is a plan view of a base part of a modified mould for making interlocking articles,

Figure 6 is a perspective view of a blank formed in accordance with the invention for producing a toy house, and

Figure 7 is an enlarged detail cross-sectional view of part of the blank of Figure 6.

The moulding apparatus comprises a frame 1 having two arms 2, 3 which are pivotally interconnected by a hinge 4 at one end and which have at the other end a releasable connection 5 which may take any suitable form, for example a bolt passing through co-operating eyes formed in depending members 6. One arm 2 of the frame has attached thereto base parts 8 of moulds 9 and the other arm 3 carries lid parts 10 of the moulds, the lid parts being attached to the arms 3 by supports 11. Preferably, the frame has eight moulds 9 arranged in two side-by-side rows of four, in which case one lid part 10 may co-operate with two side-by-side base parts.

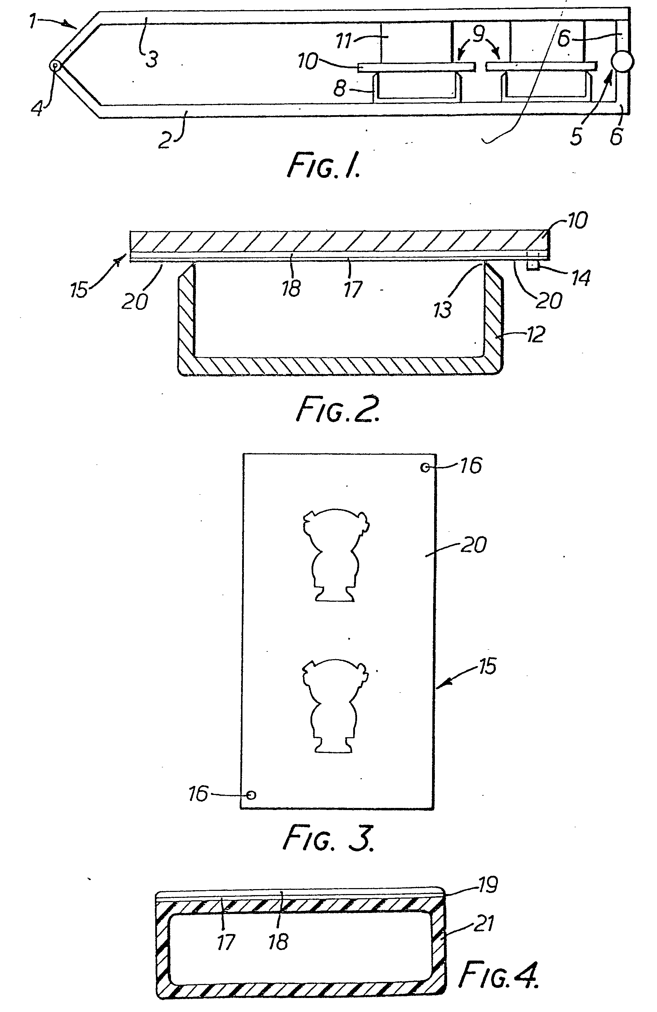

As best seen in Figure 2, the upper edge of the side wall 12 of each base part 8 is formed as a knife edge 13 which co-operates with the lid part 10.

The lid part 10 has two spigots or projections 14 which serve to locate a carrier sheet 15, such as is illustrated in Figure 3, in which locating holes 16 have been punched. Alignment of the holes 16 with the projections 14 ensures that the carrier sheet 15 will be properly located for the moulding process as will be described below.

The carrier sheet 15 comprises a thin plastics layer 17 having printing 18 thereon and at least part of the lower or inner surface of the lid part is polished to permit the un-printed zone of the carrier sheet to adhere by suction to the lid part. The inner surface of the lid part may be polished only in the region which extends beyond the co-operating wall 12 of the base part. Preferably however that part of the lid adjacent the printed zone on the carrier sheet is also highly polished to provide a high gloss finish on the printed part of the finished article.

To mould the article the arms 2, 3 of the frame are unlocked and the frame opened to permit each carrier sheet 15 to be located on a lid part 10 using the locating projections and holes. Each carrier sheet is smoothed out to remove any air bubbles between the lid part 10 and the carrier sheet 15, which adheres to the lid part by suction. Plastics material to form the base or substrate 21 of the article, which is for example polyvinyl chloride (P.V.C.) in the form of powder or plastisol, is introduced into each mould base part 8, and the arms 2, 3 closed and locked together so that they attain the predetermined positions illustrated in Figure 1. The connection of the arms of the frame ensures that the lid parts and corresponding base parts are in perfect register and the printing 18 is correctly positioned with respect to the mould base part 8.

The mould assembly is rotated and heated in known manner and during the moulding process the knife edge 13 of each mould scores or cuts the carrier sheet along the edge 19 of the finished article. During the moulding process the carrier sheet 15 acts as a gasket between the base and lid parts of the mould and prevents leakage of the material from within the mould.

After moulding, the frame is opened and each article is removed from its mould and the outer part 20 of the carrier sheet beyond the edge 19 of the finished article is simply removed by hand without the need for a further cutting operation. Although shown as a sharp edge, the knife edge 13 may have a substantial thickness and yet still cut or score the carrier sheet. For example, the thickness of the knife edge may be about 1/32 inches (0.794 mm).

The plastics layer 17, which is preferably of P.V.C. or other material compatible with the material in the mould, is located adjacent the base part with the ink layer 18 in contact with the lid part. It has been found that the ink layer 18 and the plastics layer 17 tend to fuse with each other and with the substrate 21 and the ink layer 18 is practically irremovable.

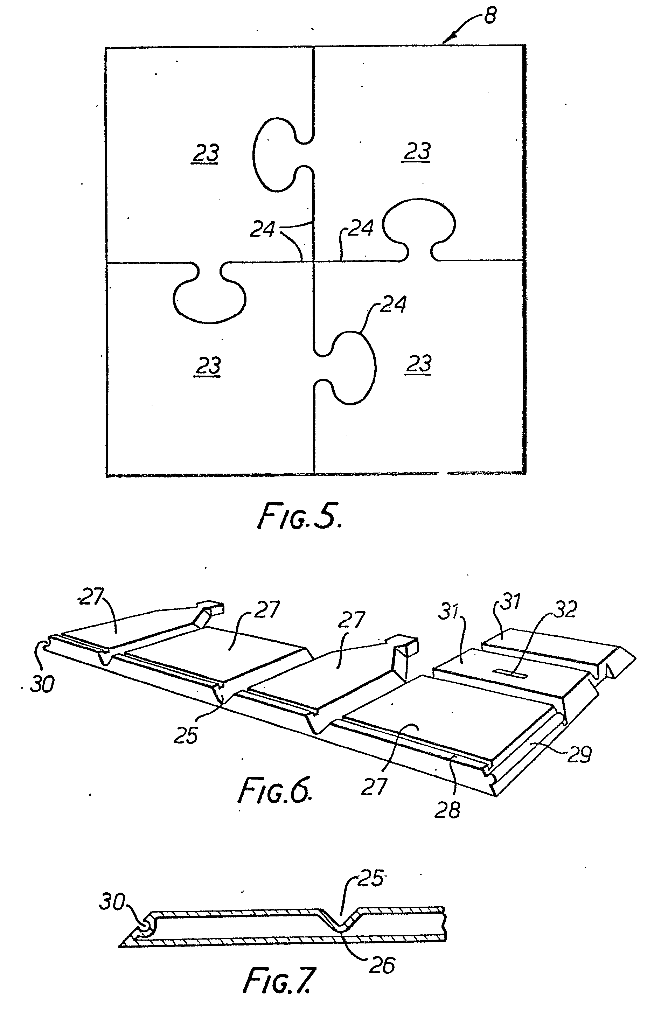

Figure 5 illustrates a modified form of mould base part which is divided into sections 23 by internal walls 24 arranged to provide any desired shape of sections. The walls are preferably less than 1/32 inch (0.794 mm) thick and have the same effect of scoring or cutting the carrier sheet as the knife edges 13 of the side walls of the base part.

The sections 23 are preferably of the same volume, and may conveniently be the same shape, and equal amounts of plastics material are introduced into the respective sections to provide the substrate. The moulding operation is similar to that described above.

It will be appreciated that utilising this mould base part the finished article comprises a plurality, four as illustrated, of parts which interlock in the manner of jigsaw pieces. When interlocked the printing of one part registers perfectly with the printing of an adjacent part. Furthermore the gap between the parts, which is the same as the thickness of walls 24, facilitates assembly and separation of the parts.

Figure 6 shows an article which is formed using a mould base part similar to that of Figure 5, but in which dividing walls 24 are an inverted V-shape and do not engage with the lid part during the moulding process. The resultant article has V-shaped grooves 25 so that each section is separated by a thin portion 26 of material which forms a hinge.

The illustrated article is in the form of a blank for construction into a house, the printing on the undersurface of the blank, as seen in Figure 6, being of brickwork, doors and windows etc., to be visible when the blank is made up.

To make up the blank, each of the wall sections 27 is folded about its hinge and a base (not shown) is inserted in a groove 28 formed in each wall section. The end wall sections have locking means, in the illustrated case in the form of co-operating tongue 29 and groove 30, which lock the end wall sections together. The roof sections 31 are then folded over about their hinges 26 and locked in places by suitable locking means (not shown) or by adhesive. The house may be used as a money box in which case a slot 32 is provided in the roof.

It will be appreciated that although a blank for a house is illustrated, other articles, for example a boat or a train, could be made from suitable blanks.

Instead of polishing the inner surface of the lid part 1 of a removable polished plate, which can be readily replaced, may be attached to the underside of the lid part.

Furthermore, the polished surface may be engraved or be provided with recesses to provide a relieved surface on the finished article.

Although described as flat, the said surface may be part cylindrical.

The above-described method can be carried out by relatively unskilled operatives. The carrier sheet need only be located on a similar sized and shaped lid part using the simple locating means. After the moulding operation and release of the article from the mould, it is necessary only to remove the flashing of the carrier sheet, which is scored or cut through to permit easy removal.

The moulded article may be provided with a "squeaker" in known manner and may take any suitable form or shape. In a particular example the article is in the shape of the outline of a cartoon-type character and the printing can provide precise detail of the character. In another example, the article takes the form of a greetings card with the printing taking the form of a picture and suitable wording.

The printing may be in any desired combination of colours.

It will be appreciated that the bottom wall of the base part 8 of each mould may be provided by a part (not shown) similar to lid part 10 to enable an article with decoration on both sides to be produced. The bottom wall may receive a carrier having a decoration which is the same as, or different from, the decoration on the lid part 10. The part forming the bottom wall may have some or all of the features of the lid part 10 described above.

The above-described article has a level of quality which has hitherto proved impracticable.

**Claims**

1. A method of producing a decorated article using a mould comprising a base part with a mould cavity and a lid part co-operating with but being movable away from the base part, said method comprising the steps of locating in a predetermined position on the lid part a carrier having ink thereon, charging the mould cavity with plastics material, and rotationally moulding the article, characterised in that the carrier (15) is arranged with the ink (18) facing the inner surface of the lid part (9), and that the lid part is located in a predetermined position on the base part (8) with the carrier (15) extending beyond the wall (12) of the base part (8) that is directed towards the lid part (9).

2. A method according to claim 1, characterised in that the co-operating wall (12) of the base part has a cutting edge, said method including the step of removing after moulding the portion (20) of the carrier (15) which extends beyond the co-operating wall of the base part and which has been scored or cut through by the cutting edge during moulding.

3. A method according to claim 1 or 2, characterised in that the carrier is of plastics material on which the decorative ink is printed, and the plastics material of the carrier is transparent or translucent.

4. A method according to any of claims 1 to 3, characterised in that at least a part of the surface of the lid part is polished, and including the step of securing the plastics carrier to the polished part of the surface by suction.

5. A rotational mould having a base part with a mould cavity and a lid part co-operating with but being movable relative to the base part, means for locating an ink-carrying carrier in a predetermined position relative to the lid part, characterised in that there are provided means for locating the lid part (9) in a predetermined position relative to the base part (8), the lid part (9) and the carrier (15) having co-operating locating means (14, 16) that ensure that the carrier can only be positioned on the lid part (9) such that the ink of the carrier (15) faces the inner surface of the lid part and such that the carrier extends beyond the wall (12) of the base part that is directed towards the lid part (9).

6. A mould according to claim 5, characterised in that the co-operating wall (12) of the base part presents a cutting edge (13) which is engageable with the lid part.

7. A mould according to claim 6, characterised in that the cutting edge (13) has a thickness less than 0.794 mm (1/32 inches).

8. A mould according to any of claims 5 to 7, characterised in that the mould includes internal walls (24) which separate the base part into individual mould sections.

9. A mould according to claim 8, characterised in that the internal walls are engageable with the lid part.

10. A mould according to claim 9, characterised in that the internal walls have a thickness of less than 0.794 mm (1/32 inches).

11. A mould according to claim 10, characterised in that the internal walls (24) are spaced from the lid part (9) to provide flexural hinge portions (25) in the moulded article.

12. A mould according to any of claims 5 to 11, characterised in that the carrier locating means comprise a plurality of spigots (14) cooperable with corresponding holes (16) in the carrier (15).

13. A mould according to any of claims 5 to 12, characterised in that at least part of the surface of the lid part facing the base part is polished.

14. A mould according to claim 13, characterised in that the whole of said surface of the lid part is polished.

15. A mould according to claim 13, characterised in that only the portion of the said surface of the lid part which extends beyond the co-operating walls (12) of the base part is polished.

16. A mould according to any of claims 13 to 15, characterised in that said polished surface is provided by a removable plate.

17. A mould according to any of claims 5 to 16, characterised in that the surface of the lid part facing said base part is relieved.

18. A mould according to claim 17, characterised in that the said surface of the lid part has recesses which provide protuberances in the moulded article.

19. A mould according to any of claims 5 to 18, characterised in that the bottom wall of the base part comprises a further such lid part.

20. A mould according to any of claims 5 to 19, characterised in that the inner surface of the lid part is substantially planar or part-cylindrical.

21. A moulding apparatus characterised in that said apparatus comprises a plurality of moulds according to any of claims 7 to 20 mounted in a frame.

22. A moulding apparatus according to claim 21, characterised in that the frame provides said means for locating the lid parts relative to the base parts.

23. A moulding apparatus according to claim 22, characterised in that the frame has two pivotally connected arms (2, 3), one arm carrying the mould lid parts and the other arm carrying the base parts, the two arms being lockable in a closed position in which the lid parts engages the co-operating walls of the base parts.

**Revendications**

1. Procédé de production d'un article décoré utilisant un moule comprenant une partie de base avec une cavité de moule et une partie de couvercle coopérant avec, mais étant mobile part rapport à la partie de base, ledit procédé comprenant les phases de mise en place dans une position prédéterminée sur la partie de couvercle d'un support portant de l'encre, de chargement de la cavité du moule avec de la matière plastique, et de moulage centrifuge de l'article, caractérisé en ce que le support (15) est agencé avec l'encre (18) faisant face à la surface intérieure de la partie de couvercle (9) et que la partie de couvercle est mise en place dans une position prédéterminée sur la partie de base (8) avec le support (15) s'étendant au-delà de la paroi (12) de la partie de base (8) qui est dirigée vers la partie de couvercle (9).

2. Procédé selon la revendication 1, caractérisé en ce que la paroi coopérante (12) de la partie de base comporte un bord tranchant, ledit procédé comprenant la phase d'enlèvement après moulage de la partie (20) du support (15) qui s'étend au-delà de la paroi coopérante de la partie de base et qui a été entaillée ou coupée par le bord tranchant pendant le moulage.

3. Procédé selon la revendication 1 ou 2, caractérisé en ce que le support est en matière plastique sur laquelle l'encre décorative est imprimée, et la matière plastique du support est transparente ou translucide.

4. Procédé selon l'une quelconque des revendications 1 à 3, caractérisé en ce qu'au moins une partie de la surface de la partie de couvercle est polie, et comprenant la phase de fixation du support en matière plastique sur la partie polie de la surface par succion.

5. Moule centrifuge comprenant une partie de base avec une cavité de moule et une partie de couvercle coopérant avec mais étant mobile par rapport à la partie de base, un dispositif de positionnement d'un support portant de l'encre dans une position prédéterminée par rapport à la partie de couvercle, caractérisé en ce que sont prévus des moyens de positionnement de la partie de couvercle (9) dans une position prédéterminée par rapport à la partie de base (8), la partie de couvercle (9) et le support (15) comportant des dispositifs de positionnement coopérants (14, 16) assurant que le support peut seulement être positionné sur la partie de couvercle (9) de manière que l'encre des supports (15) se trouve en face de la surface intérieure de la partie de couvercle et que le support s'étende au-delà de la paroi (12) de la partie de base qui est dirigée vers la partie de couvercle (9).

6. Moule selon la revendication 5, caractérisé en ce que la paroi coopérante (12) de la partie de base présente une arête tranchante (13) qui peut s'engager avec la partie de couvercle.

7. Moule selon la revendication 6, caractérisé en ce que l'arête tranchante (13) a une épaisseur inférieure à 0,794 mm (1/32 pouces).

8. Moule selon l'une quelconque des revendications 5 à 7, caractérisé en ce que le moule comporte des parois internes (24) qui divisent la partie de base en sections individuelles de moule.

9. Moule selon la revendication 8, caractérisé en ce que les parois internes peuvent s'engager avec la partie de couvercle.

10. Moule selon la revendication 9, caractérisé en ce que les parois internes ont une épaisseur inférieure à 0,794 mm (1/32 pouces).

11. Moule selon la revendication 10, caractérisé en ce que les parois internes (24) sont espacées de la partie de couvercle (9) pour former des parties de charnière (25) dans l'article moulé.

12. Moule selon l'une quelconque des revendications 5 à 11, caractérisé en ce que le dispositif de positionnement du support comporte plusieurs tétons (14) coopérant avec des trous correspondants (16) dans le support (15).

13. Moule selon l'une quelconque des revendications 5 à 12, caractérisé en ce qu'au moins une partie de la surface de la partie de couvercle faisant face à la partie de base est polie.

14. Moule selon la revendication 13, caractérisé en ce que la totalité de ladite surface de la partie de couvercle est polie.

15. Moule selon la revendication 13, caractérisé en ce que seulement la partie de ladite surface de la partie de couvercle qui s'étend au-delà des parois coopérantes (12) de la partie da base est polie.

16. Moule selon l'une quelconque des revendications 13 à 15, caractérisé en ce que ladite surface polie est formée par une plaque amovible.

17. Moule selon l'une quelconque des revendications 5 à 16, caractérisé en ce que la surface de la partie de couvercle faisant face à la partie de base est en relief.

18. Moule selon la revendication 17, caractérisé en ce que ladite surface de la partie de couvercle comporte de logements qui forment des protubérances dans l'article moulé.

19. Moule selon l'une quelconque des revendications 5 à 18, caractérisé en ce que la paroi inférieure de la partie de base consiste en une autre partie de couvercle similaire.

20. Moule selon l'une quelconque des revendications 5 à 19, caractérisé en ce que la surface intérieure de la partie de couvercle est substantiellement plane ou partiellement cylindrique.

21. Appareil de moulage caractérisé en ce que ledit appareil comporte plusieurs moules selon l'une quelconque des revendications 7 à 20, montés dans un châssis.

22. Appareil de moulage selon la revendication 21, caractérisé en ce que le châssis constitue ledit moyen de positionnement des parties de couvercle par rapport aux parties de base.

23. Appareil de moulage selon la revendication 22, caractérisé en ce que le châssis comporte deux bras assemblés pivotants (2, 3), un bras portant les parties de couvercle de moule et l'autre bras portant les parties de base, les deux bras pouvant être verrouillés dans une position fermée dans laquelle les parties de couvercle engagent les parois coopérantes des parties de base.

### Patentansprüche

1. Ein Verfahren zum Herstellen eines verzierten Artikels unter Verwendung einer Form mit einem Grundteil, das einen Formhohlraum hat, und mit einem Deckelteil, das mit dem Grundteil zusammenarbeitet, aber von diesem wegbewegbar ist, umfaßt folgende Schritte: Anordnen eines Trägers mit Farbe darauf in einer vorbestimmten Lage auf dem Deckelteil, Füllen des Formhohlraumes mit Kunststoffmaterial, und Formen des Artikels in drehender Weise, dadurch gekennzeichnet, daß der Träger (15) so angeordnet ist, daß die Farbe (18) die innere Oberfläche des Deckelteils (9) bedeckt, und daß der Deckelteil in einer vorbestimmten Lage auf dem Grundteil (8) angeordnet ist, wobei sich der Träger (15) außerhalb der Wand (12) des Grundteiles (8) erstreckt, das auf den Deckelteil (9) gerichtet ist.

2. Ein Verfahren nach Anspruch 1, dadurch gekennzeichnet, daß die zusammenwirkende Wand (12) des Grundteiles eine schneidende Ecke hat, wobei das Verfahren nach dem Formen den Schritt des Entfernens des Teiles (20) des Trägers (15) aufweist, der sich außerhalb der zusammenarbeitenden Wand des Grundteiles erstreckt und der durch die schneidende Ecke während des Formens durchgekerbt oder durchgeschnitten worden ist.

3. Ein Verfahren nach Anspruch 1 oder 2, dadurch gekennzeichnet, daß der Träger aus Kunststoffmaterial besteht, auf dem die verzierende Farbe aufgedruckt ist, und daß Kunststoffmaterial des Trägers transparent oder durchscheinend ist.

4. Ein Verfahren nach einem der Ansprüche 1 bis 3, dadurch gekennzeichnet, daß wenigstens ein Teil der Oberfläche des Deckelteils poliert ist, und daß es den Schritt des Befestigens des Kunststoffträgers an dem polierten Teil der Oberfläche durch Ansaugen aufweist.

5. Eine Rotationsform hat ein Grundteil mit einem Formhohlraum und einem Deckelteil, das mit dem Grundteil zusammenarbeitet, aber gegenüber diesem relativ beweglich ist, eine Einrichtung zum Anordnen eines eine Farbe tragenden Trägers in einer vorbestimmten Lage relativ zu dem Deckelteil, dadurch gekennzeichnet, daß eine Einrichtung zum Festlegen des Deckelteils (9) in einer vorbestimmten Lage relativ zum Grundteil (8) vorgesehen ist, wobei das Deckelteil (9) und der Träger (15) eine zusammenarbeitende Anordnungseinrichtung (14, 16) haben, die sicherstellt, daß der Träger nur in der Weise auf dem Deckelteil (9) festgelegt werden kann, daß die Farbe des Trägers (15) die innere Oberfläche des Deckelteils (15) bedeckt und daß der Träger sich außerhalb der Wand (12) der Grundteiles erstreckt, das auf das Deckelteil (9) gerichtet ist.

6. Eine Form nach Anspruch 5, dadurch gekennzeichnet, daß die zusammenarbeitende Wand (12) des Grundteiles eine schneidende Ecke (13) hat, die mit dem Deckelteil in Eingriff bringbar ist.

7. Eine Form nach Anspruch 6, dadurch gekennzeichnet, daß die schneidende Ecke (13) eine Dicke hat, die kleiner als 0,794 mm (1/32 Inch) ist.

8. Eine Form nach einem der Ansprüche 5 bis 7, dadurch gekennzeichnet, daß die Forme innere Wände (24) hat, die das Grundteil in einzelne Formabschnitte aufteilt.

9. Eine Form nach Anspruch 8, dadurch gekennzeichnet, daß die inneren Wände mit dem Deckelteil in Eingriff bringbar sind.

10. Eine Form nach Anspruch 9, dadurch gekennzeichnet, daß die inneren Wände eine Dicke von weniger als 0,794 mm (1/32 Inch) haben.

11. Eine Form nach Anspruch 10, dadurch gekennzeichnet, daß die inneren Wände (24) von dem Deckelteil (9) beabstandet sind, um biegbare Klappteile (25) in dem geformten Artikel zu schaffen.

12. Eine Form nach einem der Ansprüche 5 bis 11, dadurch gekennzeichnet, daß die den Träger anordnende Einrichtung eine Vielzahl von Zapfen (14) hat, die mit entsprechenden Löchern (16) in dem Träger (15) zusammenarbeiten können.

13. Eine Form nach einem der Ansprüche 5 bis 12, dadurch gekennzeichnet, daß wenigstens ein Teil der Oberfläche des Deckelteils, die dem Grundteil gegenüberliegt, poliert ist.

14. Eine Form nach Anspruch 13, dadurch gekennzeichnet, daß die gesamte Oberfläche des Deckelteils poliert ist.

15. Eine Form nach Anspruch 13, dadurch gekennzeichnet, daß nur der Teil der Oberfläche des Deckelteils, der sich zwischen den zusammenarbeitenden Wänden (12) des Grundteils erstreckt, poliert ist.

16. Eine Form nach einem der Ansprüche 13 bis 15, dadurch gekennzeichnet, daß die polierte Oberfläche eine entfernbare Platte hat.

17. Eine Form nach einem der Ansprüche 5 bis 16, dadurch gekennzeichnet, daß die Oberfläche des dem Grundteil gegenüberliegenden Deckelteils eine Relieform hat.

18. Eine Form nach Anspruch 17, dadurch gekennzeichnet, daß die Oberfläche des Deckelteils zurücktretende Bereiche hat, die Vorsprünge in dem geformten Artikel schaffen.

19. Eine Form nach einem der Ansprüche 5 bis 18, dadurch gekennzeichnet, daß die Bodenwand des Grundteils ein weiteres derartiges Deckelteil aufweist.

20. Eine Form nach einem der Ansprüche 5 bis 19, dadurch gekennzeichnet, daß die innere Oberfläche des Deckelteils im wesentlichen eben oder teil-zylindrisch ist.

21. Ein Formungsgerät, dadurch gekennzeichnet, daß das Gerät eine Vielzahl von Formen nach einem der Ansprüche 7 bis 20 hat, die in einem Rahmen befestigt sind.

22. Ein Formungsgerät nach Anspruch 21, dadurch gekennzeichnet, daß der Rahmen die Einrichtung zum Anordnen der Deckelteile relativ zu den Grundteilen schafft.

23. Ein Formungsgerät nach Anspruch 22, dadurch gekennzeichnet, daß der Rahmen (2) in drehbarer Weise verbundene Arme (2, 3) hat, wobei ein Arm die Formdeckteile trägt und der andere Arm die Grundteile trägt, wobei die beiden Arme in eine geschlossenen Stellung verrastbar sind, in der die Deckelteile mit den zusammenarbeitenden Wänden der Grundteile Eingriff nehmen.

**0 003 082**

Fig. 1.

Fig. 2.

Fig. 3.

Fig. 4.

8

23    23

24    24

24

23    23

**FIG. 5.**

27    27    27    31    31    32

30

25    27    29

28

**FIG. 6.**

30    25

26

**FIG. 7.**